# FASCICULE DE BREVET EUROPEEN

(11) **EP 2 556 734 B1**
(45) Date de publication et mention de la délivrance du brevet: **05.12.2018**
(21) Numéro de dépôt: 12290267.9
(22) Date de dépôt: 06.08.2012
(51) Int. Cl.: A01B 29/04

(54) **MACHINE AGRICOLE À ROUE ET ROULEAU ADAPTÉS**
LANDWIRTSCHAFTLICHE MASCHINE MIT ANGEPASSTEM RAD UND ANGEPASSTER WALZE
AGRICULTURAL MACHINE WITH ADAPTED ROLLER AND WHEEL

(30) Priorité: 12.08.2011 FR 1102513
(43) Date de publication de la demande: 13.02.2013
(73) Titulaire: OTICO, 77650 Chalmaison (FR)
(72) Inventeur: Phely, Olivier, F-77520 Thenisy (FR); Piou, Denis, F-89340 Villeblevin (FR)
(74) Mandataire: Plaçais, Jean Yves

(56) Documents cités:
- EP-A1- 1 527 665
- EP-A1- 1 856 963
- EP-A1- 2 055 164
- EP-A1- 2 269 431
- WO-A2-2004/073381
- DE-A1-102007 012 877
- DE-A1-102007 051 046
- DE-U1- 20 122 586
- US-A- 5 628 372

## Description

L'invention concerne une machine agricole comprenant un ou plusieurs rouleaux et des roues permettant de créer dans la terre des sillons pour réappuyer la terre, y semer des graines ou repiquer des plans.

Un tel rouleau est par exemple divulgué dans le document FR 2 763 279 au nom de la Demanderesse. Ce rouleau est conçu uniquement pour travailler en champs. Durant le déplacement de la machine sur route, le rouleau doit être porté pour que ses pneumatiques ne roulent pas sur la route, ce qui provoquerait une usure rapide. À cet effet, la machine comportant le rouleau est équipée de roues porteuses escamotables entre une position de travail, où le rouleau repose librement sur le sol, et une position de route, où le rouleau est supporté au-dessus du niveau du sol.

Dans ce type de dispositif, les roues porteuses, en position de travail, c'est-à-dire escamotées, ne remplissent pas la fonction de préparation du sol. En conséquence, la dimension totale du rouleau, ou de l'assemblage de rouleaux, couvre toute la largeur de travail en position de travail. Le cumul des roues porteuses ainsi que des rouleaux sur toute la largeur de travail rend complexe une telle machine agricole. Celle-ci présente une masse élevée, impliquant une consommation énergétique importante.

Dans d'autres dispositifs les roues porteuses ne sont pas escamotées en position de travail. Les roues forment alors des traces non désirées dans la terre ce qui nuit à l'homogénéité des sillons sur la largeur de travail.

La Demanderesse a également proposé une machine agricole semi portée dont le rouleau équipé de ses pneumatiques peut successivement travailler en champ pour créer des sillons dans le sol, et rouler sur route sans qu'il soit nécessaire de relever le rouleau. Un tel dispositif est décrit dans le document FR 2 841 733. Ce dispositif fait l'économie des roues porteuses escamotables ou système analogue ainsi que des moyens de commande de ces roues porteuses. Ce système donne satisfaction.

Un dispositif similaire est connu par le document EP1527665 montrant des rouleaux repliables situés aux extrémités de la machine. Un autre dispositif est connu de DE20122586U. Ce dispositif comporte des roues gonflées comportant des anneaux pour tasser le sol et servant au travail et au transport sur route ainsi que des rouleaux comportant un tube porteur et des anneaux pour tasser le sol. La Demanderesse a néanmoins poursuivi ses recherches afin d'améliorer encore le dispositif. En position de transport sur route, la position autoportée du rouleau, c'est-à-dire en contact avec la route, limite la vitesse de déplacement. Des éléments mécaniques supplémentaires permettent l'indépendance de certaines portions du rouleau. Ceci limite l'usure importante et hétérogène, en particulier sur des voies accidentées. Cependant, les éléments mécaniques supplémentaires sont coûteux et augmentent la masse totale de la machine. L'entretien d'un tel dispositif est coûteux. La spécificité des pièces utilisées rend complexe les réparations et remplacements.

L'invention vient améliorer la situation.

L'invention vise essentiellement à proposer une machine agricole comprenant un premier bâti et au moins un rouleau, non gonflé le rouleau comprenant au moins un tube monté à rotation autour d'un premier axe sur des paliers reliés au premier bâti. La machine agricole comprend un second bâti, relié au premier bâti, et au moins une roue, gonflée la roue comprenant au moins une jante montée à rotation autour d'un second axe sur des paliers reliés au second bâti. La roue est pourvue d'au moins un pneu enfilé sur la jante. Le rouleau présente un bandage autour du tube, le pneu de la roue présentant une bande de roulement, le bandage et la bande de roulement étant munis de sculptures définissant un motif élémentaire répété selon une direction transversale parallèle au premier axe, respectivement au second axe. Le pas de répétition transversale du motif élémentaire du rouleau et le pas de répétition transversale du motif élémentaire de la roue sont égaux à 10 % près. Les motifs élémentaires définissent des nervures dont la hauteur sur le rouleau et la hauteur sur la roue, sont égales à 90 % près. La répétition et la hauteur des nervures permettant de former dans la terre une série de sillons sensiblement parallèles et sensiblement équidistants.

De préférence, le rouleau est pourvu d'une série de pneumatiques enfilés sur le tube. Les pneumatiques incluent le bandage. Les pneumatiques du rouleau sont de type semi-creux dont une portion du bandage est reliée à un fourreau par deux flancs de manière à délimiter un espace annulaire creux. L'espace annulaire creux d'un pneumatique occupe, avantageusement, un volume inférieur au volume occupé par la matière constituant ledit pneumatique.

Dans une forme de réalisation avantageuse, les nervures de l'un au moins de la roue ou du rouleau présentent des profils, en section transversale, en dôme arrondi. L'extrémité des nervures peut comprendre un méplat.

Notamment dans une position de travail, et selon un mode de réalisation, le premier et le second axes sont sensiblement parallèles et écartés d'une distance choisie. Cette distance est préférentiellement choisie supérieure à la hauteur des nervures du rouleau ou de la roue et inférieure au plus grand des rayons du rouleau et de la roue. Cette distance peut être en particulier inférieure au plus petit des rayons du rouleau et de la roue.

De manière à améliorer le maniement d'une telle machine agricole, notamment en position de transport, celle-ci peut comprendre en outre au moins un moyen de freinage apte à exercer de manière commandée un couple résistant entre le premier bâti et le tube et/ou entre le second bâti et la jante.

La machine agricole peut comprendre deux roues ou deux paires de roues, un rouleau central et deux rouleaux latéraux. Chaque roue ou paire de roues est disposée entre le rouleau central et respectivement chacun des deux rouleaux latéraux selon une direction parallèle au premier axe, dans une position de travail. Préférentiellement, chacun des deux rouleaux latéraux est rétractable dans une position de transport. Dans une position de transport, la machine agricole présente, avantageusement, une dimension maximale, selon une direction parallèle au premier axe du rouleau central, inférieure ou égale à trois mètres.

D'autres caractéristiques et avantages de l'invention apparaitront à l'examen de la description détaillée ci-après, et des dessins annexés, sur lesquels :
- la figure 1 est une vue schématique générale de l'arrière d'une machine agricole en position de travail,
- la figure 2 est une vue de dessus de la machine agricole de la figure 1,
- la figure 3 est une vue schématique de l'arrière d'une machine agricole en position de transport,
- la figure 4 est une vue de côté de la machine agricole de la figure 3,
- la figure 5 est une vue en coupe d'une paire de rouleaux d'une machine agricole,
- la figure 6 est une vue schématique partielle en coupe et en perspective d'une portion d'un pneumatique de rouleau,
- la figure 7 est une vue schématique partielle et en coupe longitudinale d'un rouleau de machine agricole,
- la figure 8 est une vue schématique partielle en perspective et en coupe d'une portion d'un pneumatique de rouleau,
- la figure 9 est une vue schématique partielle et en coupe d'une portion de bandage d'un rouleau de machine agricole,
- la figure 10 est une vue schématique partielle et en coupe d'une portion d'extrémité d'un bandage de rouleau de machine agricole,
- la figure 11 est une vue en coupe d'une paire de roues d'une machine agricole,
- la figure 12 est une vue schématique et en coupe d'une portion de bande de roulement d'une roue de machine agricole,
- la figure 13 est une vue schématique partielle et en coupe d'une portion d'extrémité d'une bande de roulement d'une roue de machine agricole,
- la figure 14 est une vue schématique des l'arrière des roues et rouleaux d'une machine agricole dont seules les pneumatiques et les pneus ont été représentés,
- la figure 15 est une vue de dessus des roues et rouleaux de la figure 14, et
- la figure 16 est une vue en perspective des roues et rouleaux des figures 14 et 15.

Les dessins annexés sont pour l'essentiel de caractère certain, et pourront non seulement servir à compléter l'invention, mais aussi contribuer à sa définition le cas échéant. Il est relevé que des éléments comme la géométrie de profils de pneus et pneumatiques sont difficiles à définir complètement, autrement que par le dessin.

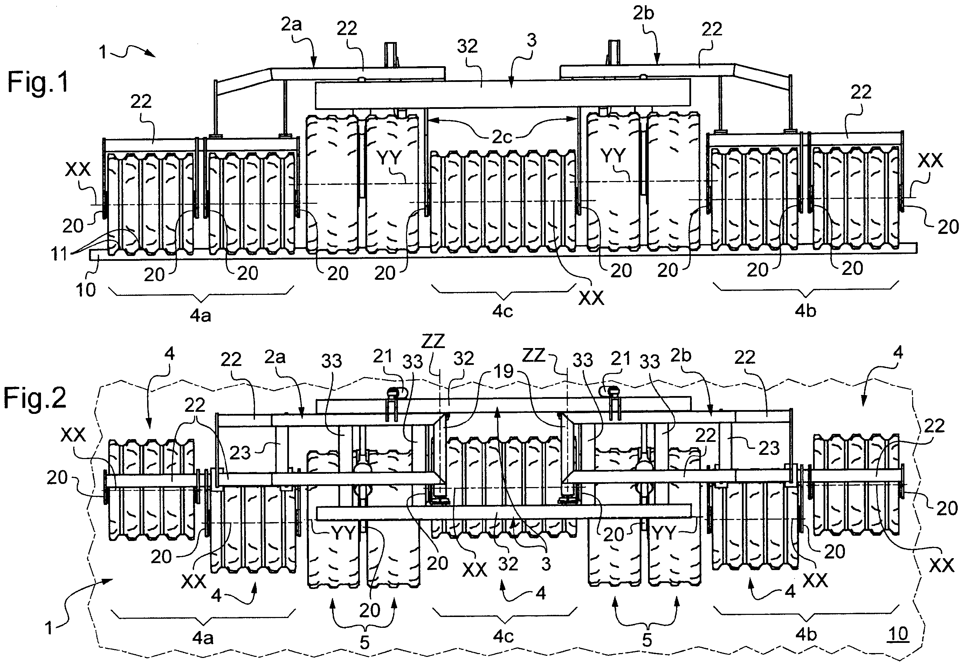

Il est fait référence aux figures 1 et 2 qui montrent une machine agricole 1 tractée par un véhicule non représenté, par exemple un tracteur. La machine agricole 1 est, dans l'exemple décrit ici, en position de travail. On utilise les termes avant et arrière en accord avec le sens d'avancement de la machine agricole 1. La partie avant de la machine agricole 1 est en haut de la figure 2. La machine agricole 1 comprend deux premiers bâtis latéraux 2a, 2b et un premier bâti central 2c reliés chacun au même second bâti 3.

Chaque premier bâti latéral 2a, 2b comprend, dans l'exemple décrit ici, des éléments longitudinaux 22 disposés sensiblement perpendiculairement au sens d'avancement de la machine agricole 1. Chaque premier bâti latéral 2a, 2b comprend des entretoises 23. Les entretoises 23 sont disposées sensiblement parallèlement au sens d'avancement de la machine agricole 1 et lient entre eux les éléments longitudinaux 22. Les éléments longitudinaux 22 supportent des paliers 20. Le premier bâti central 2c comprend deux bras reliés au second bâti 3. Chacun des bras supporte un palier 20. Les paliers 20 supportent des tubes 40 de rouleaux 4 montés à rotation autour de premiers axes XX. Dans l'exemple décrit ici, chacun des premiers bâtis latéraux 2a, 2b comprend deux paires de paliers 20. Le premier bâti central 2c comprend une paire de palier 20. Chaque paire de paliers 20 supporte un tube 40 monté à rotation autour du premier axe XX.

Le second bâti 3 comprend des éléments longitudinaux 32 disposés sensiblement perpendiculairement au sens d'avancement de la machine agricole 1. Le second bâti 3 comprend des entretoises 33 disposées sensiblement parallèlement au sens d'avancement de la machine agricole 1 et reliant entre eux les éléments longitudinaux 32. Chaque premier bâti 2a, 2b, 2c est lié au second bâti 3 par l'intermédiaire d'un axe rotatif 19 selon un axe de rotation ZZ. Les axes de rotation ZZ des premiers bâtis latéraux 2a, 2b sont sensiblement parallèles aux entretoises 33. L'axe de rotation ZZ du premier bâti central 2c est sensiblement perpendiculaire aux entretoises 33 (non visible sur les figures 1 et 2). Le second bâti 3 supporte d'autres paliers 20. Dans l'exemple décrit ici, les paliers 20 du second bâti 3 supportent des jantes 50 montées à rotation autour de seconds axes YY. Ici, chacun des deux paliers 20 du second bâti 3 supporte un arbre de roues 56 (non visible sur les figures 1 et 2) supportant lui-même deux jantes 50. La paire de jantes 50 à gauche sur les figures 1 et 2 est montée à rotation autour du même second axe YY. La paire de jantes 50 à droite sur les figures 1 et 2 est montée à rotation autour du même second axe YY. En variante, la machine agricole 1 comprend une seule jante 50 à gauche et une seule jante 50 à droite.

Chaque tube 40 appartient à un rouleau 4. Chaque jante 50 appartient à une roue 5. Les rouleaux 4 sont montés à rotation autour de premiers axes XX. Les roues 5 sont montées à rotation autour de seconds axes YY.

Dans l'exemple décrit ici la machine agricole 1 comprend deux paires de roues 5, une paire de rouleaux latéraux gauches 4a, une paire de rouleaux latéraux droits 4b et un rouleau central 4c. Les paires de roues 5 sont supportées par le second bâti 3 par l'intermédiaire de paliers 20. La paire de rouleaux latéraux gauches 4a est supportée par le premier bâti latéral gauche 2a par l'intermédiaire de paliers 20. La paire de rouleaux latéraux droits 4b est supportée par le premier bâti latéral droit 2b par l'intermédiaire de paliers 20. Le rouleau central 4c est supporté par le premier bâti central 2c par l'intermédiaire de paliers 20 et disposé entre chacune des paires de roues 5.

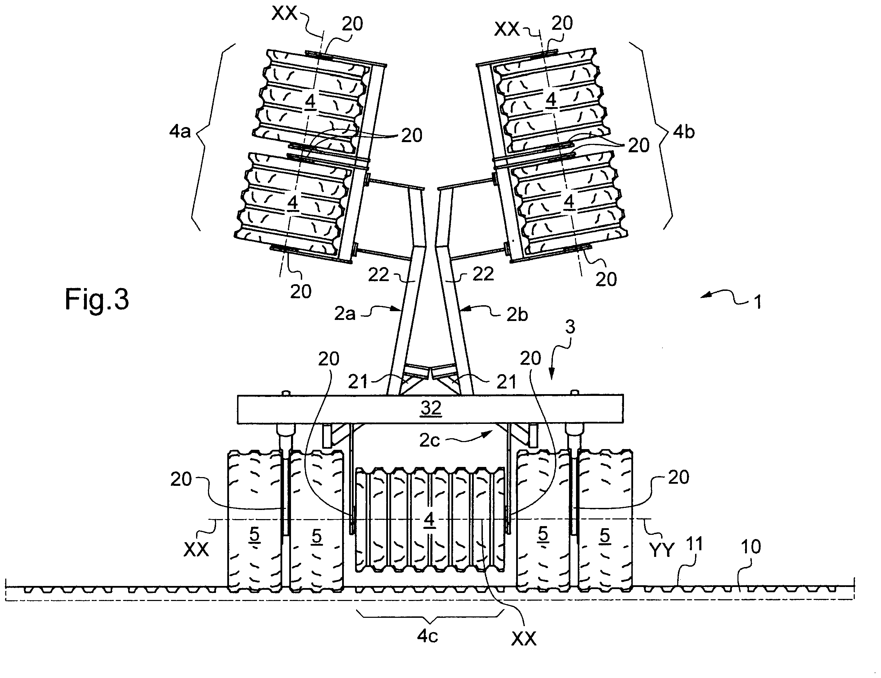

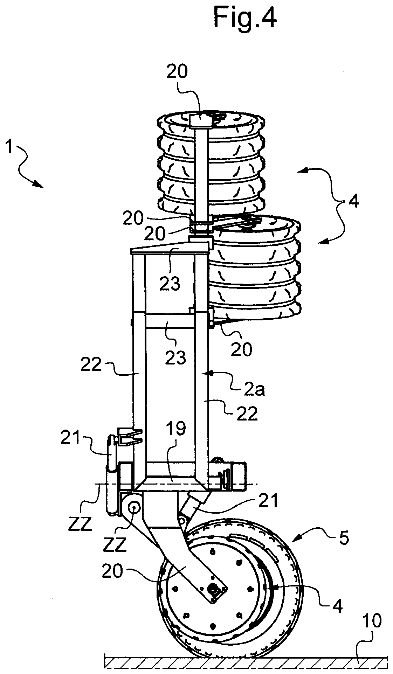

Des vérins 21 permettent de mettre en rotation chaque premier bâti 2a, 2b, 2c par rapport à son axe de rotation ZZ pour passer d'une position de travail telle que représentée en figures 1 et 2 à une position de transport représentée en figures 3 et 4. En position de travail, les rouleaux 4 et les roues 5 reposent sur le sol 10 pour former des sillons 11. En position de transport, les premiers bâtis latéraux 2a, 2b sont relevés au-dessus du second bâti 3. Le rouleau central 4 est relevé à distance au-dessus du sol 10 grâce à un autre vérin 21, non visible sur les figures 1 à 3. Les roues 5 sont en contact avec le sol 10, tandis que les rouleaux 4 sont surélevés. En position de transport, les roues 5 supportent l'essentiel du poids de la machine agricole 1.

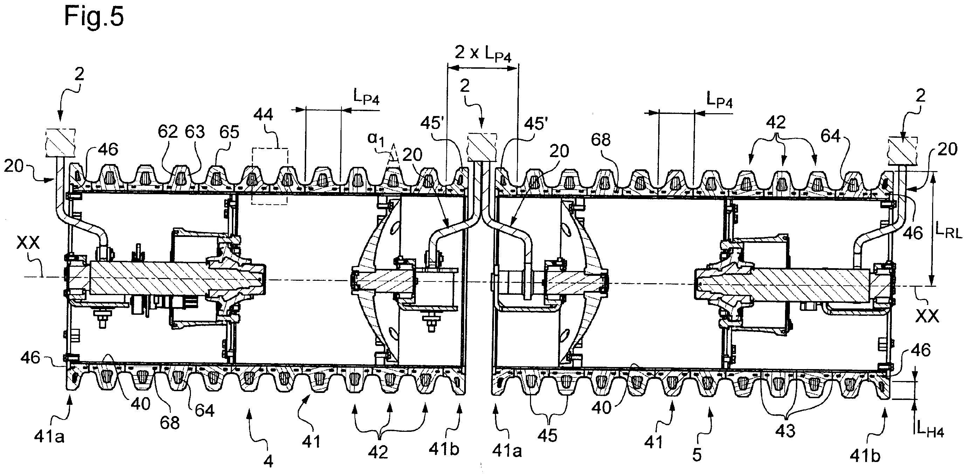

On se réfère maintenant à la figure 5. Chaque rouleau 4 comprend au moins un tube 40 monté à rotation autour d'un premier axe XX par l'intermédiaire de paliers 20 reliés au premier bâti 2. Le rouleau 4 présente un bandage 42 autour du tube 40.

Dans l'exemple décrit ici, le bandage 42 est formé par une succession de pneumatiques 41a, 41, 41b montés autour du tube 40. Les pneumatiques 41a, 41, 41b sont enfilés de façon jointive les uns contre les autres et maintenus à chaque extrémité de l'empilement, par exemple au moyen d'une joue 46 d'extrémité solidaire du tube 40 assurant le serrage et le maintien de la série de pneumatiques 41a, 41, 41b.

Il est possible d'assembler les pneumatiques 41 par leurs flancs 62, 63 respectifs formant des parties en contact. Des organes de poussées aux extrémités peuvent être utilisés pour réaliser l'assemblage. Les divers pneumatiques 41a, 41, 41b de l'empilement peuvent être en outre solidarisés entre eux par des éléments d'assemblage appropriés (non représentés), par exemple ceux décrits dans la publication FR-A-2-784 331, au nom de la Demanderesse, à laquelle on pourra se référer pour de plus amples détails. Chaque joue d'extrémité 46 vient en appui contre le premier pneumatique 41a, respectivement le dernier pneumatique 41b de l'empilement, qui du fait de leurs fonctions, peuvent présenter un profil légèrement différent des pneumatiques 41 du centre du rouleau 4, pour leur permettre de s'emboiter dans chacune des joues 46. La joue 46 est elle-même solidarisée au tube central 40. De cette manière, l'empilement des pneumatiques 41a, 41, 41b et le tube 40 forment un ensemble solidaire constituant un rouleau 4 susceptible d'être monté via les paliers 20 sur le premier bâti support 2 de la machine agricole 1.

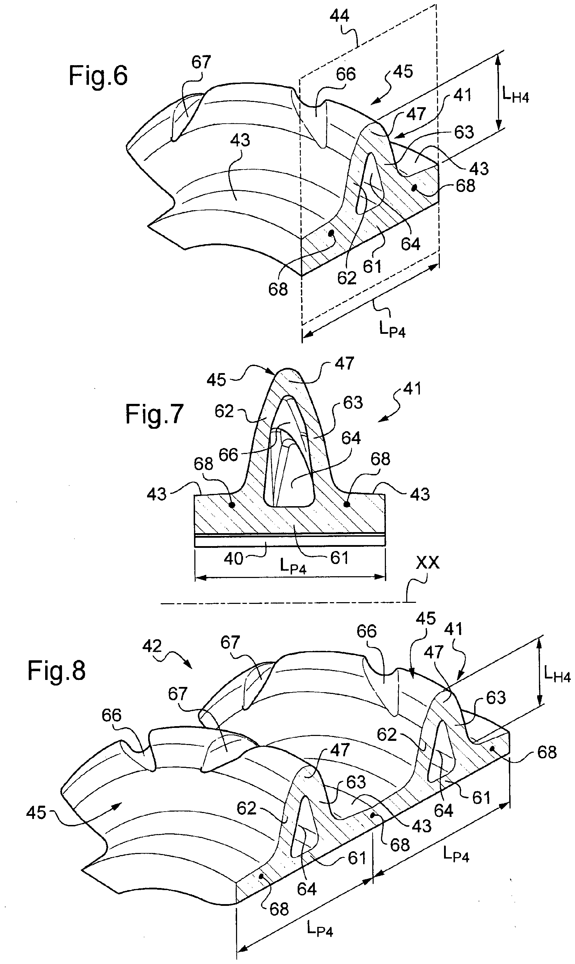

Un mode de réalisation d'un pneumatique 41 est représenté en figures 6 et 7. Ce type de pneumatique 41 est légèrement différent de ceux de la figure 5. Un montage de tels pneumatiques 41, de type semi-creux, sont décrits dans la demande de brevet français N° FR 2 913 915.

Dans l'exemple des figures 6 et 7, le pneumatique 41 du rouleau 4 présente un profil en dôme semi-creux. Le profil semi-creux comprend deux flancs 62, 63 reliés à un fourreau 61. Le fourreau 61 est disposé sensiblement parallèlement à la paroi du tube 40. Les flancs 62 et 63 du profil semi-creux s'étendent dans une direction opposée au tube 40. Les flancs 62, 63 sont mutuellement reliés par leurs extrémités opposées au tube 40. Les extrémités reliées des flancs 62, 63 forment le dôme 47. L'enveloppe extérieure du dôme 47 forme une partie du bandage 42. L'enveloppe extérieure des flancs 62, 63 et du dôme 47 forment, selon un plan comprenant le premier axe XX, une nervure 45 circonférentielle du rouleau 4 intercalée entre deux demi-sculptures 43. Le terme nervure désigne ici la portion mâle du profil de pneumatique 41, tandis que le terme sculpture désigne ici la partie femelle du profil de pneumatique 41.

Dans l'exemple décrit ici, le fourreau 61 et les flancs 62, 63 délimitent un espace annulaire creux 64. Cette configuration confère au pneumatique 41 un caractère semi-creux, c'est-à-dire que l'espace annulaire creux 64 n'est pas gonflé mais peut communiquer avec le milieu ambiant au moyen d'un trou (non représenté) traversant l'épaisseur du fourreau 61. Cet orifice permet, outre l'équilibrage des pressions en utilisation, d'injecter de l'air sous pression lors de l'étape de vulcanisation en fabrication.

Il est en effet souhaitable que le pneumatique 41 puisse se déformer quelque peu dans la région comprise entre le dôme 47 et le fourreau 61 pour faciliter le décollement de la terre qui, sinon, aurait tendance à adhérer au pneumatique 41 dans la région des flancs 62, 63. Cette déformation du pneumatique 41, qui lui procure une souplesse suffisante pour amortir les déformations et être autonettoyant, est cependant limitée par la forme en dôme, qui évite que le dôme 47 ne s'affaisse de façon excessive.

L'espacement annulaire creux 64 d'un pneumatique 41 occupe préférentiellement un volume inférieur au volume occupé par la matière constituant ledit pneumatique 41.

Dans une variante, les pneumatiques 41 sont pleins, c'est-à-dire que l'espace annulaire creux 64 est inexistant.

Dans l'exemple décrit ici, le fourreau 61 est mécaniquement renforcé par deux joncs 68 métalliques noyés dans la matière du pneumatique 41, en particulier pour assurer un meilleur maintien sur le tube 40 en dépit des sollicitations mécaniques reçues par le pneumatique 41, qui peuvent être assez intenses et brutales. En variante, le pneumatique 41 comprend un seul, plus de deux ou même aucun jonc métallique.

Les pneumatiques 41 comportent, dans l'exemple décrit ici, au sommet du bandage 42, c'est-à-dire au sein du dôme 47, des indentations 66, 67, formées à la périphérie du pneumatique 41 et réparties dans la direction circonférentielle. Dans le mode de réalisation des figures 6 et 7, ces indentations 66, 67 sont disposées obliquement, c'est-à-dire qu'elles forment un angle, de l'ordre de 30° à 45°, alternativement dans un sens et dans l'autre. Les indentations 66, 67 sont conçues de manière à s'étendre chacune dans un demi espace défini par un plan médian du pneumatique 41, alternativement d'un côté et de l'autre de ce plan, les indentations 66, 67 étant en outre décalées circonférentiellement d'une indentation 66 à la suivante 67.

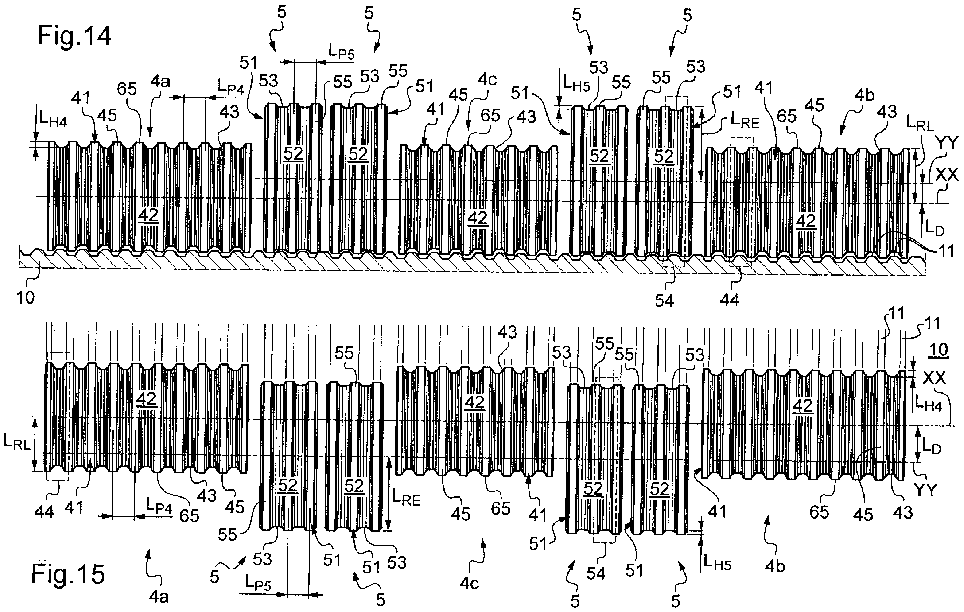

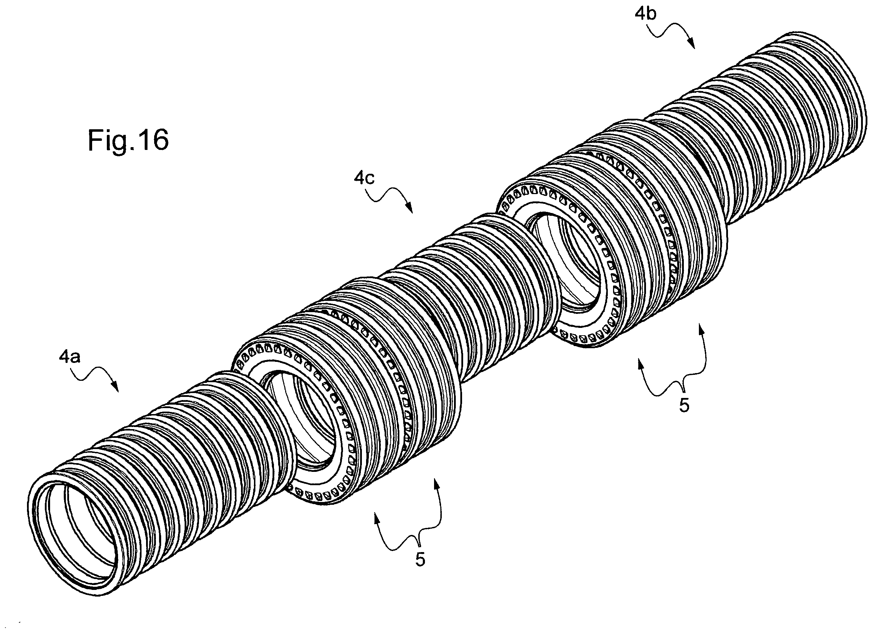

En variante, en lieu et place des indentations 66, 67, la périphérie du pneumatique 41 peut comprendre des crampons. Les crampons sont en saillie de l'enveloppe extérieure du pneumatique 41 par opposition aux indentations 66, 67. Dans une autre variante, les pneumatiques 41 comprennent une combinaison d'indentations 66, 67 et de crampons. Les indentations 66, 67 et/ou les crampons forment des irrégularités choisies dans l'enveloppe extérieure du pneumatique 41 et donc du bandage 42. Dans une autre variante, visible en figures 14 à 16, les pneumatiques 41 ne comprennent ni indentation, ni crampon.

La figure 8 représente un mode de réalisation dans lequel un pneumatique 41 est similaire à deux pneumatiques 41 de la figure 6 juxtaposés et monoblocs. Le pneumatique 41 de la figure 8 comprend deux nervures 45 séparées par une sculpture 43, le tout étant intercalé entre deux autres demi-sculptures 43.

L'enveloppe extérieure de la juxtaposition des pneumatiques 41a, 41, 41b forment le bandage 42 du rouleau 4, cf. figure 5. Autrement dit, selon une direction parallèle au premier axe XX, le bandage 42 comprend une succession alternée de sculptures 43 et de nervures 45. Une nervure 45 bordée de deux demi-sculptures 43, ou bien une sculpture 43 bordée de deux demi-nervures 45 ou bien encore une nervure 45 juxtaposée à une sculpture 43 définit un motif élémentaire 44. Le motif élémentaire 44 est répété selon la direction du premier axe XX.

Le pas de répétition transversale du motif élémentaire 44 du rouleau 4 est référencé L_{P4}. On utilise ici le terme transversal pour désigner la direction gauche-droite de la machine agricole 1, par opposition à une direction circonférentielle sur le rouleau 4. Dans les modes de réalisation des figures 5 à 7, la largeur de chaque pneumatique 41 selon la direction du premier axe XX, est égale au pas L_{P4}. Dans le mode de réalisation de la figure 8, la largeur du pneumatique 41 selon une direction parallèle aux premiers axes XX, est égale au double du pas L_{P4} d'un rouleau 4 formé de tels pneumatiques 41. C'est-à-dire que le pneumatique 41 de la figure 8 comprend à lui seul la répétition de deux motifs élémentaires 44.

La projection dans un plan perpendiculaire au premier axe XX de la distance séparant l'enveloppe extérieure d'une sculpture 43 et l'enveloppe extérieure du dôme 47 de la nervure 45 adjacente définit une hauteur L_{H4} de la nervure 45. La hauteur L_{H4} peut également être vue comme la profondeur de la sculpture 43. Autrement dit, le bandage 42 du rouleau 4 est défini, entre autres, par le motif élémentaire 44 et son pas L_{P4} de répétition correspondant à la distance « crête à crête » ou « creux à creux » selon la direction du premier axe XX. Le bandage 42 du rouleau 4 est défini aussi par la hauteur L_{H4} des nervures 45, c'est-à-dire les variations de diamètre de l'enveloppe extérieure du rouleau 4 selon la direction du premier axe XX.

En utilisation, le déplacement du premier bâti support 2 selon l'avancement de la machine agricole 1 entraîne par réaction des pneumatiques 41a, 41, 41b sur le sol 10 la rotation du rouleau 4. Les pneumatiques 41a, 41, 41b créent dans le sol 10 des sillons 11 sensiblement parallèles entre eux et équidistants, sillons 11 dans lesquels pourront par exemple être semées des graines. L'espacement entre les centres des sillons 11 correspond à l'intervalle entre les dômes 47 des nervures 45 adjacentes, autrement dit appartenant à deux motifs élémentaires 44 adjacents. Cet espacement correspond au pas L_{P4} du rouleau 4. Le choix de la valeur du pas L_{P4} dépend de l'écart entre les sillons 11 voulus. L'espacement entre les sillons 11 peut être ajusté par l'interposition entre les pneumatiques 41 adjacents d'éléments annulaires intercalaires dont la largeur en direction axiale sera choisie en fonction de l'écart voulu pour les sillons 11. La largeur des sillons 11 traitée par les pneumatiques 41 peut être choisie en fonction des applications pour permettre, par exemple, de former une seule ligne de semis ou bien au moins deux lignes de semis.

La profondeur des sillons 11 correspond sensiblement à la hauteur L_{H4} des nervures 45. Le choix de la valeur de la hauteur L_{H4} des nervures 45 dépend de la profondeur des sillons 11 voulue.

L'absence ou la présence et le choix des indentations 66, 67 et/ou des crampons dépend notamment du type d'irrégularité recherché pour les sillons 11. Les indentations 66, 67 et/ou les crampons permettent en outre d'améliorer le frottement entre le rouleau 4 et le sol 10 pour éviter les phénomènes de glissement.

Dans les modes de réalisation des figures 6 à 8, les nervures 45 d'un rouleau 4 présentent un profil en dôme arrondi. En variante, représentée en figures 5 et 14 à 16, le dôme 47 peut comprendre un méplat 65. Le méplat 65 forme, vu selon son profil, l'extrémité de la nervure 45 et appartient au bandage 42.

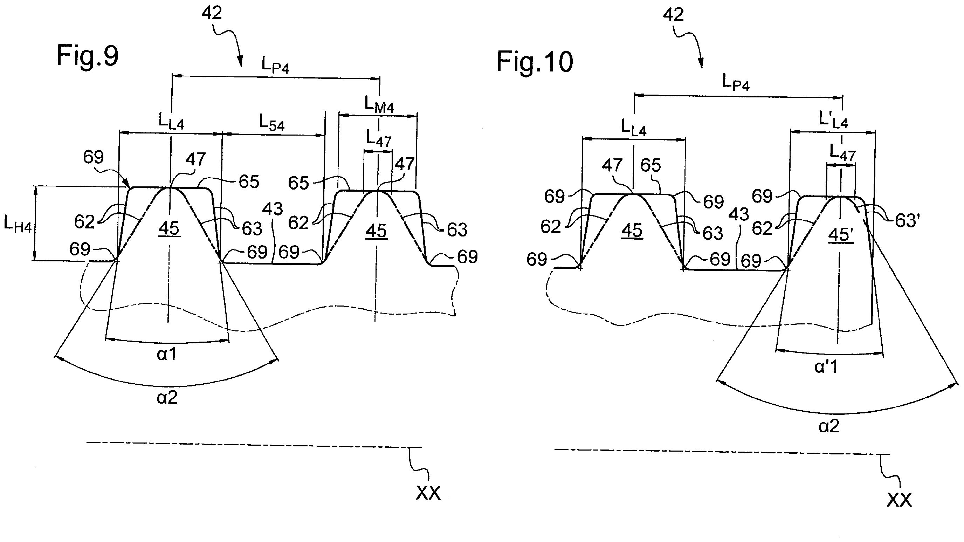

On se réfère maintenant à la figure 9 représentant la géométrie du bandage 42 d'un rouleau 4 en coupe selon un plan comprenant le premier axe XX. La figure 9 représente une portion centrale du bandage 42 selon la direction axiale XX du rouleau 4, par exemple formée par les pneumatiques 41 des figures 6 et 7. Deux modes de réalisation sont représentées sur la figure 9 : un premier mode à profil de nervure 45 dit trapézoïdale comprenant un méplat 65 et un second mode, en traits tiretés sur la figure, à profil de nervure 45 dit triangulaire comprenant une extrémité en dôme 47 arrondi. Chaque nervure 45 possède un plan de symétrie perpendiculaire au premier axe XX et passant par le centre de ladite nervure 45.

Le profil des nervures 45 est en partie défini par la forme des flancs 62, 63. Chacun des flancs 62, 63 présente, ici, un profil sensiblement droit. Les flancs 62, 63 d'une même nervure 45 forment entre eux un angle référencé α₁ pour le profil trapézoïdal et α₂ pour le profil triangulaire. Les flancs 62, 63 sont raccordés entre eux par le méplat 65, sensiblement parallèle au premier axe XX, dans le mode trapézoïdale. Les flancs 62, 63 sont raccordés entre eux par le dôme 47 dans le mode triangulaire.

La sculpture 43 est agencée, selon la direction du premier axe XX, entre deux nervures 45 similaires. Dans l'exemple décrit ici et selon le plan de coupe de la figure 9, la sculpture 43 est formée d'une surface extérieure sensiblement droite et parallèle au premier axe XX. Les flancs 62, 63 et les sculptures 43 d'une part et les flancs 62, 63 et les méplats 65 d'autre part sont raccordés entre eux par l'intermédiaire de congés de raccordements 69. Les congés de raccordements 69 ne sont pas pris en compte dans les mesures d'angles et de distances. Dans le mode triangulaire, le dôme 47 arrondi raccorde entre eux les flancs 62, 63 d'une nervure 45.

L'angle (non référencé) entre la sculpture 43 et le flanc 62, 63 adjacent est sensiblement égal à la moitié de l'angle α₁, α₂ entre les deux flancs 62, 63 d'une nervure 45, majoré de 90°. La plus petite distance, selon la direction du premier axe XX, séparant deux nervures 45 juxtaposées, correspond à la largeur de la sculpture 43 intermédiaire. La largeur de la sculpture 43 est référencée L_{S4}. De manière similaire, la distance, selon la direction du premier axe XX, séparant deux sculptures 43 juxtaposées, correspond à la largeur de la nervure 45 intermédiaire. La largeur de la nervure 45 est référencée L_{L4}. Le pas L_{P4} du rouleau 4 correspond à la somme de la largeur L_{L4} d'une nervure 45 et de la largeur L_{S4} d'une sculpture 43. Dans la variante trapézoïdale, la largeur du méplat 65, selon la direction du premier axe XX, est référencé L_{M4}. La largeur L_{M4} du méplat 65 est inférieure ou égale à la largeur L_{L4} de la nervure 45. Dans la variante triangulaire, la largeur du dôme 47 selon la direction du premier axe XX, est référencée L₄₇. La largeur L₄₇ du dôme 47 est strictement inférieure à la largeur L_{L4} de la nervure 45.

La Demanderesse a déterminé que le respect de rapports dimensionnels dans la réalisation du bandage 42, et donc dans le motif élémentaire 44, permettait d'assurer à la fois la création de sillons 11 respectant la grande majorité des paramètres agronomiques voulus par les utilisateurs de la machine agricole 1 tout en assurant un comportement mécanique et une durabilité du bandage 42 des rouleaux 4 satisfaisants. La hauteur L_{H4} des nervures 45 est comprise entre 10% et 70% du pas L_{P4} du rouleau 4 et de préférence comprise entre 15% et 65% du pas L_{P4} du rouleau 4. La largeur L_{L4} des nervures 45 est comprise entre 15% et 40% du pas L_{P4} du rouleau 4 et de préférence comprise entre 20% et 35% du pas L_{P4} du rouleau 4. Dans la variante trapézoïdale, l'angle α₁ entre les deux flancs 62, 63 d'une nervure 45 est supérieur ou égal à zéro et de préférence compris entre 2° et 90°. La largeur L_{M4} du méplat 65 est inférieure ou égale à la largeur L_{L4} de la nervure 45. Dans un mode triangulaire, l'angle α₂ entre les deux flancs 62, 63 d'une nervure 45 est supérieur ou égal à zéro et de préférence compris entre 45° et 90°. La largeur L₄₇ du dôme 47 est supérieure à 4% du pas L_{P4} et de préférence supérieure à 6% du pas L_{P4}. L'angle α₁, α₂ entre les flancs 62, 63 est compris entre 0 et 90°.

La figure 10 représente une portion d'extrémité (à droite sur la figure 10) selon la direction du premier axe XX du rouleau 4, par exemple formée par un pneumatique 41b des figures précédentes. La figure 10 est similaire à la figure 9 à la différence près que la moitié d'extrémité de la nervure d'extrémité 45' est tronquée (à droite sur la figure 10). La nervure 45' d'extrémité présente un profil asymétrique. Autrement dit, les largeurs L'_{L4}, L'_{M4} et la portion à droite de l'angle α'₁ sont réduits par rapport à leurs équivalents des nervures 45 centrales. Le flanc 63' de la version triangulaire est tronqué dans sa partie la plus proche du tube 40 pour être raccordée à une surface d'extrémité du rouleau 4 sensiblement perpendiculaire au premier axe XX.

Comme cela est mieux visible en figure 5, un écart est ménagé entre deux rouleaux 4 de manière à permettre la liaison mécanique des paliers 20 avec le bâti 2. L'aspect tronqué des nervures 45' d'extrémité permet, malgré la discontinuité des bandages 42 des deux rouleaux 4 juxtaposés, de préserver la continuité du pas L_{P4} entre les deux rouleaux 4. L'écart entre des nervures 45 de chacun des rouleaux 4 est alors préférentiellement égal à un nombre entier du pas L_{P4}. La structure des sillons 11 formés à l'interface des deux rouleaux 4 est alors peu différente de celle des autres sillons 11.

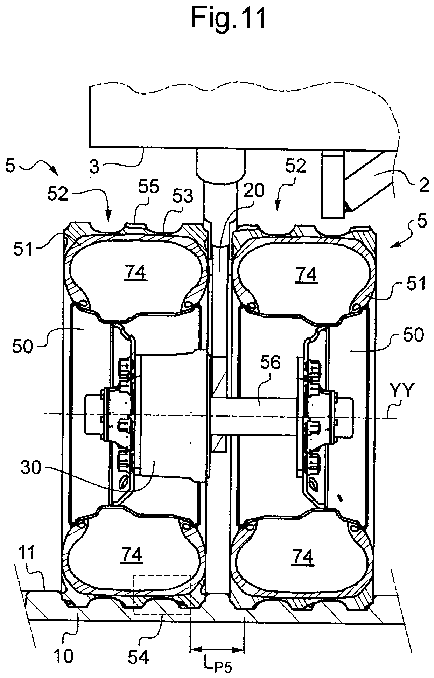

On se réfère maintenant à la figure 11. Chaque roue 5 comprend au moins une jante 50 montée à rotation autour d'un second axe YY sur des paliers 20 reliés au second bâti 3. La roue 5 présente une bande de roulement 52 autour de la jante 50. Dans l'exemple décrit ici, un pneu 51 est monté autour de la jante 50 pour former la bande de roulement 52.

Classiquement, l'expression « bande de roulement » vise un pneumatique monté sur une roue, et désigne la partie du pneumatique qui a vocation à venir au contact du sol. Ici, le terme « bandage » définit le revêtement du rouleau, qui peut comprendre une pluralité de bandes de roulement de pneumatique, fabriquées individuellement, ou bien un ensemble monobloc de bandes de roulement de pneumatique. Dans tous les cas, il s'agit de la surface périphérique externe de la roue, ou du rouleau, destinée à venir au contact de la route et/ou de la terre.

Le pneu 51 est monté de manière classique sur la jante 50. Dans l'exemple décrit ici, les jantes 50 sont semblables à celles de tracteurs ou de camions. Les pneus 51 sont semblables à ceux des roues de tracteurs ou de camions à l'exception de la paroi diamétralement extérieure. La paroi diamétralement extérieure forme la bande de roulement 52. L'espace libre référencé 74 entre la jante 50 et une paroi intérieure du pneu 51 forme une chambre 74. La chambre 74 est isolée hermétiquement de l'extérieur. En utilisation normale, en position de travail et en position de transport, le pneu 51 est gonflé. Autrement dit, une pression d'air supérieure à la pression atmosphérique est maintenue dans la chambre 74. Les roues 5 gonflées sont bien adaptées à la circulation sur route à des vitesses sensiblement plus élevées que les vitesses de travail en champ. Les roues 5 gonflées sont bien adaptées pour les véhicules agricoles tels que la machine agricole 1.

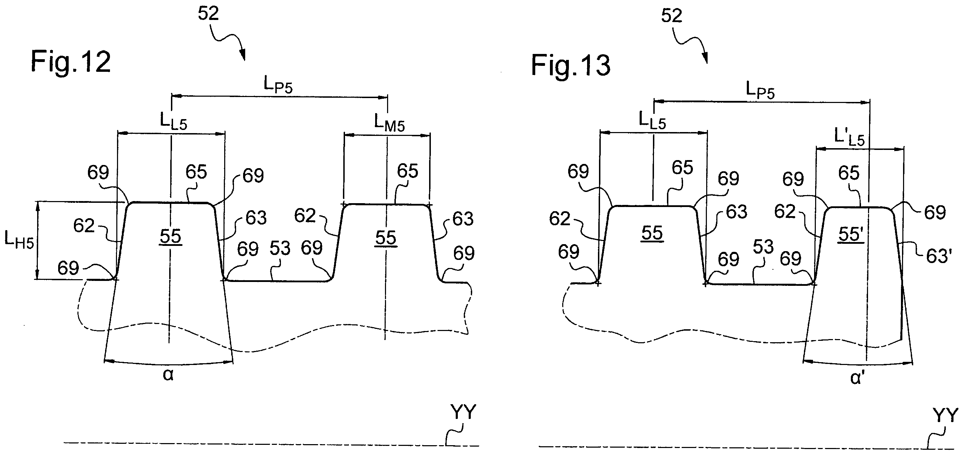

On se réfère maintenant à la figure 12. Le pneu 51 de la roue 5 présente un profil en trapèzes. Chaque profil trapézoïdal comprend deux flancs 62, 63 reliés à leurs extrémités par un méplat 65. Le méplat 65 est disposé sensiblement parallèlement au second axe YY sur lequel la roue 5 est montée à rotation. Les flancs 62, 63 du profil trapézoïdal s'étendent vers une direction opposée à la jante 50. Le volume en partie délimité par les flancs 62, 63 et le méplat 65 forme une nervure 55 circonférentielle de la roue 5. Deux nervures 55 juxtaposées selon la direction du second axe YY sont mutuellement reliées par l'intermédiaire d'une sculpture 53. Les sculptures 53 et les méplats 65 sont sensiblement parallèles entre eux. Les nervures 55 et les sculptures 53 forment chacune une partie de la bande de roulement 52 de la roue 5. Le terme nervure désigne ici la portion mâle du profil de la bande de roulement 52 du pneu 51, tandis que le terme sculpture désigne ici la partie femelle du profil de la bande de roulement 52 du pneu 51. La nervure 55 circonférentielle de la roue 5 est intercalée entre deux demi-sculptures 53 selon un plan comprenant le second axe YY.

Dans l'exemple décrit ici, et contrairement aux exemples de profils semi-creux du rouleau 4, les nervures 55 sont pleines. Cette configuration confère aux nervures 55 du pneu 51 une bonne tenue mécanique lorsqu'elles sont soumises à une compression. Ceci est notamment important en position de transport de la machine agricole 1 car l'essentiel du poids de la machine agricole 1 est alors supporté par les nervures 55 au contact de la route.

En position de travail, par exemple dans un champ, il est souhaitable que le pneu 51 puisse se déformer quelque peu pour faciliter le décollement de la terre qui, sinon, aurait tendance à adhérer au pneu 51 dans la région des flancs 62, 63 et/ou des sculptures 53. Cette déformation du pneu 51 est rendue possible par la configuration gonflée et la présence de la chambre 74. Cette configuration lui procure une souplesse suffisante pour amortir les déformations et être autonettoyant.

Les pneus 51 comportent, dans l'exemple décrit ici, aux sommets de la bande de roulement 52, c'est-à-dire au sein des nervures 55, des indentations formées à la périphérie du pneu 51 et réparties dans la direction circonférentielle (non représentées sur les figures 12 et 13). La présence ou l'absence d'indentation et/ou de crampon ainsi que leurs caractéristiques sont définies de la même manière que les indentations et les crampons décrits précédemment à propos des pneumatiques 41 des rouleaux 4. Ces irrégularités circonférentielles choisies de la bande de roulement 52 des roues 5 assurent, outre les fonctions similaires à celles des rouleaux 4, une fonction anti-patinage des roues 5 dans le sol 10. En position de transport, sur route humide notamment, la présence d'indentation et/ou de crampons dans la bande de roulement 52 permet d'améliorer l'adhérence du pneu 51.

L'enveloppe extérieure du pneu 51 forme la bande de roulement 52 de la roue 5. Autrement dit, selon la direction du second axe YY, la bande de roulement 52 comprend une succession alternée de sculptures 53 et de nervures 55. Une nervure 55 bordée de deux demi-sculptures 53, ou bien une sculpture 53 bordée de deux demi-nervures 55 ou bien encore une nervure 55 juxtaposée à une sculpture 53 définit un motif élémentaire 54. Le motif élémentaire 54 est répété selon la direction du second axe YY. Le pas de répétition transversale du motif élémentaire 54 de la roue 5 est référencée L_{P5}. On utilise ici le terme transversal pour désigner la direction gauche-droite de la machine agricole 1, par opposition à une direction circonférentielle sur la roue 5.

La projection dans un plan perpendiculaire au second axe YY de la distance séparant l'enveloppe extérieure d'une sculpture 53 et l'enveloppe extérieure du méplat 65 de la nervure 55 adjacente définit une hauteur L_{H5} de la nervure 55. La hauteur L_{H5} peut également être vue comme la profondeur de la sculpture 53. Autrement dit, la bande de roulement 52 de la roue 5 est définie, entre autres, par le motif élémentaire 54 et son pas L_{P5} de répétition correspondant à la distance « crête à crête » ou « creux à creux » selon la direction du second axe YY. La bande de roulement 52 de la roue 5 est définie aussi par la hauteur L_{H5} des nervures 55, c'est-à-dire les variations de diamètre de l'enveloppe extérieure de la roue 5 selon la direction du second axe YY.

En utilisation, par exemple dans un champ, en position de travail, les pneus 51 créent dans le sol 10 des sillons 11 sensiblement parallèles entre eux et équidistants, sillons 11 dans lesquels pourront par exemple être semées des graines. L'espacement entre les centres des sillons 11 correspond à l'intervalle entre les nervures 55 adjacentes, autrement dit appartenant à deux motifs élémentaires 54 adjacents. Cet espacement correspond au pas L_{P5} de la roue 5. Le choix de la valeur du pas L_{P5} dépend de l'écart entre les sillons 11 voulus. La largeur des sillons 11 traités par le pneu 51 peut être choisie en fonction des applications pour permettre, par exemple, de former une seule ligne de semis ou bien au moins deux lignes de semis.

La profondeur des sillons 11 correspond sensiblement à la hauteur L_{H5} des nervures 55. Le choix de la valeur de la hauteur L_{H5} des nervures 55 dépend de la profondeur des sillons 11 voulue.

Dans les modes de réalisation des figures 12 et 13, les nervures 55 d'une roue 5 présentent un profil en trapèze. En variante, les nervures 55 peuvent présenter un profil en dôme arrondi. Cependant, contrairement aux rouleaux 4, les roues 5 sont destinées à supporter le poids de la machine agricole 1 en position de transport et à vitesse élevée. Les pneus 51 sont sujets à une moindre usure lorsque la surface au contact de la route est importante. Une configuration en trapèze plutôt qu'en dôme, c'est-à-dire en présence d'un méplat 65 plutôt qu'un dôme 47, rend la surface plus importante. La configuration trapézoïdale des nervures 55 de roue 5 est donc préférée, que les nervures 45 de rouleau 4 soient de configuration triangulaire ou trapézoïdale. La vitesse d'usure de la roue 5 est diminuée.

La figure 12 représente la géométrie de la bande de roulement 52 d'une roue 5 en coupe selon un plan comprenant le second axe YY. La figure 12 représente une portion centrale de la bande de roulement 52 selon la direction axiale YY de la roue 5. Seule la variante à profil de nervure 55 trapézoïdale comprenant un méplat 65 est représentée. Chaque nervure 55 possède un plan de symétrie perpendiculaire au second axe YY et passant par le centre de ladite nervure 55.

Le profil des nervures 55 est en partie définie par la forme des flancs 62, 63. Chacun des flancs 62, 63 présente, ici, un profil sensiblement droit. Les flancs 62, 63 d'une même nervure 55 forment entre eux un angle référencé α. Les flancs 62, 63 sont raccordés entre eux par le méplat 65, sensiblement parallèle au second axe YY.

La sculpture 53 est agencée, selon le second axe YY, entre deux nervures 55 similaires. Dans l'exemple décrit ici et selon le plan de coupe de la figure 12, la sculpture 53 est formée d'une surface extérieure sensiblement droite et parallèle au second axe YY. Les flancs 62, 63 et les sculptures 53 d'une part et les flancs 62, 63 et les méplats 65 d'autre part sont raccordés entre eux par l'intermédiaire de congés de raccordements 69. Les congés de raccordements 69 ne sont pas pris en compte dans les mesures d'angles et de distances.

L'angle (non référencé) entre la sculpture 53 et le flanc 62, 63 est sensiblement égal à la moitié de l'angle α entre les deux flancs 62, 63 d'une nervure 55, majoré de 90°. La plus petite distance, selon la direction du second axe YY, séparant deux nervures 55 juxtaposées, correspond à la largeur de la sculpture 53 intermédiaire. La largeur de la sculpture 53 est référencée L_{S5}. De manière similaire, la plus petite distance, selon la direction du second axe YY, séparant deux sculptures 53 juxtaposées, correspond à la largeur de la nervure 55 intermédiaire. La largeur de la nervure 55 est référencée L_{L5}. Le pas L_{P5} de la roue 5 correspond à la somme de la largeur L_{L5} d'une nervure 55 et de la largeur L_{S5} d'une sculpture 53. La largeur du méplat 65, selon la direction du second axe YY, est référencée L_{M5}. La largeur L_{M5} du méplat 65 est inférieure ou égale à la largeur L_{L5} de la nervure 55.

La Demanderesse a déterminé que le respect de rapports dimensionnels dans la réalisation de la bande de roulement 52, et donc dans le motif élémentaire 54, permettait d'assurer à la fois la création de sillons 11 respectant la grande majorité des paramètres agronomiques voulus par les utilisateurs de la machine agricole 1 tout en assurant un comportement mécanique et une durabilité de la bande de roulement 52 des roues 5 satisfaisante. La hauteur L_{H5} des nervures 55 est comprise entre 10% et 70% du pas L_{P5} de la roue 5 et de préférence comprise entre 15% et 65% du pas L_{P5} de la roue 5. La largeur L_{L5} des nervures 55 est comprise entre 15% et 40% du pas L_{P5} de la roue 5 et de préférence comprise entre 20% et 35% du pas L_{P5} de la roue 5. L'angle α entre les deux flancs 62, 63 d'une nervure 55 est supérieur ou égal à zéro et de préférence compris entre 2° et 90°. La largeur L_{M5} du méplat 65 est inférieure ou égale à la largeur L_{L4} de la nervure 45. L'angle α entre les flancs 62, 63 est compris entre 0 et 90°.

La figure 13 représente une portion d'extrémité (à droite sur la figure 13) selon la direction du second axe YY de la roue 5. La figure 13 est similaire à la figure 12 à la différence près que la moitié d'extrémité de la nervure d'extrémité 55' est tronquée (à droite sur la figure 13). La nervure 55' d'extrémité présente un profil asymétrique. Autrement dit, les largeurs L'_{L5}, L'_{M5} et la portion à droite de l'angle a' sont réduits par rapport à leurs équivalents des nervures 55 centrales.

De manière analogue à l'écart entre deux rouleaux 4 de la figure 5 précédemment décrit, un écart est ménagé entre deux roues 5 côte à côte de manière à permettre la liaison mécanique des paliers 20 avec le bâti 3. L'aspect tronqué des nervures 55' d'extrémité permet, malgré la discontinuité des bandes de roulement 52 des deux roues 5, de préserver la continuité du pas L_{P5} entre les deux roues 5. L'écart entre des nervures 55 de chacune des roues 5 est alors préférentiellement égal à un nombre entier du pas L_{P5}. La structure des sillons 11 formés à l'interface des deux roues 5 est alors peu différente de celle des autres sillons 11. Cette configuration est transposable à un écart entre un rouleau 4 et une roue 5 dont les pas L_{P4}, L_{P5} sont identiques ou peu différents.

Excepté la bande de roulement 52 et sa configuration particulière, le pneu 51 utilisé est de technologie connue. Ceci présente l'avantage, pour la fabrication des pneus 51, d'autoriser l'emploi de pneus existants et même d'occasions. Une opération de réfection de la bande de roulement de tels pneus permet d'aboutir au pneu 51. Une telle opération est généralement appelée rechapage. Cette possibilité permet de réduire la consommation de nouveau matériau, de réduire les coûts de fabrication et de recycler les pneus usagés.

Habituellement, l'utilisation de roues 5 pour le transport sur route et de rouleaux 4 pour le travail en champ a conduit les acteurs du secteur à complètement différencier structurellement ces deux organes. Ceci s'explique notamment par les contraintes mécaniques d'utilisation très différentes entre les rouleaux 4 et les roues 5. La Demanderesse est allé à l'encontre de cet a priori en conférant au bandage 42 des rouleaux 4 d'une part et à la bande de roulement 52 des roues 5 d'autre part des caractéristiques communes. Au lieu d'essayer d'adapter les rouleaux 4 au transport sur route, elle a développé un ensemble de roues et de rouleaux aptes à assurer le travail en champ de manière complémentaire.

On se réfère maintenant aux figures 14 à 16. Le mode de réalisation représenté, à la différence de celui des figures 1 à 4, ne comprend qu'un rouleau latéral gauche 4a et qu'un rouleau latéral droit 4b. Le pas L_{P4} de répétition du motif élémentaire 44 d'un rouleau 4 est égal à 10% près au pas L_{P5} de répétition du motif élémentaire 54 d'une roue 5, et de préférence égale à 5% près. La hauteur L_{H4} des nervures 45 d'un rouleau 4 est égale à 90% près à la hauteur L_{H5} des nervures 55 d'une roue 5, et de préférence égale à 50% près. Une telle correspondance dimensionnelle permet une bonne homogénéité des sillons 11 dans la terre 10 que ces derniers soient le résultat du passage d'un rouleau 4 ou d'une roue 5.

La forme des profils des nervures 45, 55 d'un rouleau 4 d'une part et d'une roue 5 d'autre part peuvent en outre être différents, par exemple une nervure 45 de rouleau 4 sensiblement triangulaire et une nervure 55 de roue 5 sensiblement trapézoïdale. La forme des profils des nervures 45, 55 d'un rouleau 4 d'une part et d'une roue 5 d'autre part sont néanmoins les plus semblables possible.

À titre d'exemple, et aux tolérances de fabrication près, le rouleau 4 présente un diamètre compris entre 500 et 1000 mm, par exemple 810 mm, c'est-à-dire un rayon L_{RL} compris entre 250 et 500 mm, par exemple 405 mm. Les hauteurs L_{H4} de nervures 45 sont incluses dans la mesure du rayon L_{RL}. Le rouleau 4 présente une hauteur L_{H4} de nervure 45 comprise entre 10 et 90 mm, de préférence entre 40 et 70 mm. Le rouleau 4 présente un pas L_{P4} compris entre 125 et 167 mm, par exemple 125, 143, 150 ou 167 mm. La valeur du pas L_{P4} est choisie notamment en fonction des valeurs standards du domaine pour s'adapter aux autres machines agricoles existantes, par exemple les semoirs. Cette adaptation aux dimensions standards entre les sillons 11 explique la plus faible tolérance de différence de pas entre le rouleau 4 et la roue 5 par rapport à la tolérance de différence de hauteur des nervures du rouleau 4 et de la roue 5. Il est possible d'avoir une différence plus importante de hauteur des nervures entre le rouleau 4 et la roue 5. Par exemple la roue 5 peut avoir une hauteur L_{H5} de nervure 55 d'environ 9 mm tandis que le rouleau 4 a une hauteur L_{H4} de nervure 45 d'environ 90 mm, ou inversement. Ce qui correspond à 90% de différence. Une telle différence un impact limité sur l'homogénéité des sillons 11 créés. Le rouleau 4 présente une largeur L_{L4} de nervure 45 comprise entre 18 et 67 mm, de préférence entre 25 et 58 mm.

La roue 5 présente un diamètre compris entre 750 et 1500 mm, par exemple 1026 mm, c'est-à-dire un rayon L_{RE} compris entre 375 et 750 mm, par exemple 513 mm. Les hauteurs L_{H5} de nervures 55 sont incluses dans la mesure du rayon L_{RE}. La roue 5 présente une hauteur L_{H5} de nervure 55, un pas L_{P5} et une longueur L_{L5} de nervure 55 respectivement dans les même limites que celles de la hauteur L_{H4} de nervure 45, du pas L_{P4} et de la longueur L_{L4} de nervure 45 du rouleau 4.

En position de travail, représentée par exemple en figures 1, 2, 14 et 15, le premier axe XX d'un rouleau 4 et le second axe YY d'une roue 5 sont sensiblement parallèles. Le premier axe XX et le second axe YY sont écartés d'une distance L_{D} choisie non nulle. Cet écart L_{D} est dû, notamment selon la composante verticale, à la différence entre les rayons L_{RN}, L_{RE} respectivement du rouleau 4 et de la roue 5.

De préférence, la distance L_{D} entre le premier axe XX et le second axe YY est supérieur à la hauteur L_{H4} des nervures 45 du rouleau 4 ou la hauteur L_{H5} des nervures 55 de la roue 5. La distance L_{D} est inférieure au plus grand des rayons L_{RL}, L_{RE} du rouleau 4 et de la roue 5. De préférence, la distance L_{D} entre un premier axe XX et un second axe YY est inférieure au plus petit des rayons L_{RL}, L_{RE} du rouleau 4 et de la roue 5. Cet écart L_{D} choisi permet à la fois aux portions basses des roues 5 et des rouleaux 4, en contact avec la terre 10, d'être sensiblement alignées tout en limitant l'encombrement de la machine agricole 1 dans la direction verticale et dans la direction horizontale avant-arrière de la machine agricole 1. Le désalignement horizontal choisi entre les rouleaux 4 et les roues 5 d'une part et/ou entre les rouleaux 4 d'autre part, comme cela est représenté en figures 1, 2, et 14 à 16 permet de faciliter la création des sillons 11 dans la terre 10. Dans le cas contraire d'un alignement horizontal des premiers axes XX et des seconds axes YY selon la direction d'avancement de la machine agricole 1, le front d'avancement de la machine 1 serait sensiblement rectiligne, ce qui augmenterait la résistance de la terre 10 à la déformation en sillon 11.

La machine agricole 1 est, dans une variante, munie d'un moyen de freinage 30 apte à exercer de manière commandée un couple résistant entre le second bâti 3 et une jante 50. Notamment dans le cas d'utilisation de roues 5 de grand diamètre de type roue de tracteur ou de camion, l'espace libre à proximité du centre de la roue 5 peut être avantageusement utilisé pour y disposer des systèmes de freinage tout en profitant d'une aération favorable au refroidissement desdits moyens de freinage. Les roues existantes et prévues pour des tracteurs peuvent en outre être aptes à recevoir de tels freins sans nécessiter de couteux aménagements spécifiques à la machine agricole 1.

Dans une position de transport, représentée en figures 3 et 4, les rouleaux 4 latéraux sont rétractés. La machine agricole 1 présente une dimension maximale selon une direction parallèle aux seconds axes YY, inférieure ou égale à trois mètres dans une position de transport. Ceci permet de respecter la plupart des normes routières pour le transport de la machine agricole 1 sur route ouverte. Ceci permet également de faciliter les virages de la machine agricole 1, par exemple pour un demi-tour à une extrémité de champ.

L'invention ne se limite pas aux modes de réalisations décrits en détail et aux quelques variantes décrites.

Les axes des roues et/ou des rouleaux sont généralement parallèles entre eux mais peuvent également être légèrement inclinés les uns par rapport aux autres par exemple dans le cas de machines munies de systèmes d'amortisseurs. Ce type de système permet d'améliorer le comportement de la machine aussi bien sur route qu'en champ en s'adaptant aux irrégularités du terrain pratiqué.

Une roue de support peut suffire au transport de la machine agricole tractée sur route, néanmoins la configuration comprenant au moins une paire de roues améliore grandement la stabilité de l'ensemble en répartissant le poids de la machine.

## Revendications

1. Machine agricole comprenant
un premier bâti (2) et au moins un rouleau (4) non gonflé, le rouleau (4) comprenant au moins un tube (40) monté à rotation autour d'un premier axe (XX) sur des paliers (20) reliés au premier bâti (2),
un second bâti (3), relié au premier bâti (2), et au moins une roue (5) gonflée, la roue (5) comprenant au moins une jante (50) montée à rotation autour d'un second axe (YY) sur des paliers (20) reliés au second bâti (3), la roue (5) étant pourvue d'au moins un pneu (51) enfilé sur la jante (50),
le rouleau (4) présentant un bandage (42) autour du tube (40), le pneu (51) de la roue (5) présentant une bande de roulement (52), le bandage (42) et la bande de roulement (52) étant munis de sculptures (43, 53) définissant un motif élémentaire (44, 54) répété selon une direction transversale parallèle au premier axe (XX), respectivement au second axe (YY),
le pas (L_{P4}) de répétition transversal du motif élémentaire (44) du rouleau (4), et le pas (L_{P5}) de répétition transversal du motif élémentaire (54) de la roue (5), étant égaux à 10% près,
les motifs élémentaires (44, 54) définissant des nervures (45, 55) dont la hauteur (L_{H4}) sur le rouleau (4) et la hauteur (L_{H5}) sur la roue (5) sont égales à 90% près,
de sorte que la répétition et la hauteur des nervures (45, 55) forment dans la terre (10) une série de sillons (11) sensiblement parallèles et sensiblement équidistants.

2. Machine agricole selon la revendication 1, dans laquelle le rouleau (4) est pourvu d'une série de pneumatiques (41) enfilés sur le tube (40), les pneumatiques (41) incluant le bandage (42), les pneumatiques (41) du rouleau (4) étant de type semi-creux et dont une portion du bandage (42) est reliée à un fourreau (61) par deux flancs (62, 63) de manière à délimiter un espace annulaire creux (64).

3. Machine agricole selon la revendication 2, dans laquelle l'espace annulaire creux (64) d'un pneumatique (41) occupe un volume inférieur au volume occupé par la matière constituant ledit pneumatique (41).

4. Machine agricole selon l'une des revendications précédentes dans laquelle les nervures (45, 55) de l'un au moins du rouleau (4) ou de la roue (5) présentent des profils, en section transversale, en dôme arrondi.

5. Machine agricole selon l'une des revendications précédentes dans laquelle les nervures (45, 55) de l'un au moins du rouleau (4) ou de la roue (5) présentent des profils, en section transversale, dont l'extrémité comprend un méplat (65).

6. Machine agricole selon l'une des revendications précédentes dans laquelle le premier axe (XX) et le second axe (YY) sont sensiblement parallèles et écartés d'une distance (L_{D}) choisie en position de travail.

7. Machine agricole selon la revendication 6, dans laquelle la distance (L_{D}) est supérieure à la hauteur (L_{H4}, L_{H5}) des nervures (45, 55) du rouleau (4) ou de la roue (5) et inférieure au plus grand des rayons (L_{RL}, L_{RE}) du rouleau (4) et de la roue (5).

8. Machine agricole selon la revendication 7, dans laquelle la distance (L_{D}) est supérieure à la hauteur (L_{H4}, L_{H5}) des nervures (45, 55) du rouleau (4) ou de la roue (5) et inférieure au plus petit des rayons (L_{RL}, L_{RE}) du rouleau (4) et de la roue (5).

9. Machine agricole selon l'une des revendications précédentes, comprenant en outre un moyen de freinage (30) apte à exercer de manière commandée un couple résistant entre le second bâti (3) et la jante (50).

10. Machine agricole selon l'une des revendications précédentes comprenant deux roues (5) ou deux paires de roues (5), un rouleau central (4c) et deux rouleaux latéraux (4a, 4b), chaque roue (5) ou paire de roues (5) étant disposée entre le rouleau central (4c) et respectivement chacun des rouleaux latéraux (4a, 4b) selon une direction parallèle au premier axe (XX), dans une position de travail.

11. Machine agricole selon la revendication 10, dans laquelle chacun des deux rouleaux latéraux (4a, 4b) est rétractable dans une position de transport.

12. Machine agricole selon la revendication 11 présentant une dimension maximale selon une direction parallèle au premier axe (XX) du rouleau central (4c), inférieure ou égale à 3 mètres dans une position de transport.

## Patentansprüche

1. Landmaschine, umfassend
ein erstes Gestell (2) und mindestens eine nicht aufgepumpte Walze (4), wobei die Walze mindestens ein Rohr (40) umfasst, welches drehbar um eine erste Achse (XX) auf Lagern (20) montiert ist, die mit dem ersten Gestell (2) verbunden sind,
ein zweites Gestell (3), welches mit dem ersten Gestell (2) verbunden ist, und mindestens ein aufgepumptes Rad (5), wobei das Rad (5) mindestens eine Felge (50) umfasst, welche drehbar um eine zweite Achse (YY) auf einem Lager (20) montiert ist, welches mit dem zweiten Gestell (3) verbunden ist, wobei das Rad (5) mindestens einen Reifen (51) aufweist, welcher auf die Felge (50) aufgezogen ist.
wobei die Walze (4) einen Radreifen (42) um das Rohr (40) aufweist, wobei der Reifen (51) des Rads (5) einen Profilabschnitt (52) aufweist, wobei der Radreifen (42) und der Profilabschnitt (52) mit Einkerbungen (43, 53) versehen sind, die ein Elementarmuster (44, 54) definieren, welches sich in Querrichtung parallel zur ersten Achse (XX) bzw. zur zweiten Achse (YY) wiederholt,
wobei der Abstand (L_{P4}) der querlaufenden Wiederholung des Elementarmusters (44) der Walze (4) und der Abstand (L_{P5}) der querlaufenden Wiederholung des Elementarmusters (54) des Rads (5) knapp 10 % betragen,
wobei die Elementarmuster (44, 54) Rippen (45, 55) definieren, deren
Höhe (L_{H4}) über der Walze (4) und Höhe (L_{H5}) über dem Rad (5) knapp 90 % betragen,
sodass die Wiederholung und die Höhe der Rippen (45, 55) im Boden (10) eine Reihe von Furchen (11) bilden, die im Wesentlichen parallel und im Wesentlichen abstandsgleich sind.

2. Landmaschine nach Anspruch 1, in welcher die Walze (4) mit einer Reihe von Reifen (41) versehen ist, welche auf das Rohr (40) aufgezogen sind, wobei die Reifen (41) die Radreifen (42) umfassen, wobei die Reifen (41) der Walze (4) halbhohl sind und von denen ein Teil der Radreifen (42) über zwei Flanken (62, 63) mit einer Hülle (61) verbunden ist, um einen ringförmigen Hohlraum abzugrenzen (64).

3. Landmaschine nach Anspruch 2, in welcher der ringförmige Hohlraum (64) einer Bereifung (41) ein Volumen einnimmt, welches geringer ist als das Volumen, das von dem Material eingenommen wird, das die Bereifung (41) aufbaut.

4. Landmaschine nach einer der vorangehenden Ansprüche, in welcher die Rippen (45, 55) der mindestens einen Walze (4) oder des Rads (5) Profile im Querschnitt als runde Kuppeln aufweisen.

5. Landmaschine nach einem der vorangehenden Ansprüche, in welcher die Rippen (45, 55) der mindestens einen Walze (4) oder des Rads (5) Profile im Querschnitt aufweisen, deren Ende eine ebene Fläche umfasst (65).

6. Landmaschine nach einem der vorangehenden Ansprüche, in welcher die erste Achse (XX) und die zweite Achse (YY) im Wesentlichen parallel zueinander und in einem Abstand (L_{D}) voneinander sind, welcher in Arbeitsposition gewählt wird.

7. Landmaschine nach Anspruch 6, in welcher der Abstand (L_{D}) größer ist als die Höhe (L_{H4}, L_{H5}) der Rippen (45, 55) der Walze (4) oder des Rads (5) und kleiner ist als der größte der Radien (L_{RL}, L_{RE}) der Walze (4) und des Rads (5).

8. Landmaschine nach Anspruch 7, in welcher der Abstand (L_{D}) größer ist als die Höhe (L_{H4}, L_{H5}) der Rippen (45, 55) der Walze (4) oder des Rads (5) und geringer ist als der kleinste der Radien (L_{RL}, L_{RE}) der Walze (4) und des Rads (5).

9. Landmaschine nach einem der vorangehenden Ansprüche, umfassend außerdem eine Bremseinrichtung (30), welche zur gesteuerten Ausübung eines Widerstandsmoments zwischen dem ersten Gestell (3) und der Felge (50) geeignet ist.

10. Landmaschine nach einem der vorangehenden Ansprüche, umfassend zwei Räder (5) oder zwei Paar Räder (5), eine zentrale Walze (4c) und zwei seitliche Walzen (4a, 4b), wobei jedes Rad (5) oder Paar Räder (5) zwischen der zentralen Walze (4c) bzw. jeder der seitlichen Walzen (4a, 4b) in einer Richtung parallel zur ersten Achse (XX) in einer Arbeitsposition angeordnet ist.

11. Landmaschine nach Anspruch 10, in welcher jede der beiden seitlichen Walzen (4a, 4b) in eine Transportposition versenkbar ist.

12. Landmaschine nach Anspruch 11, welche eine Höchstgröße in einer Richtung parallel zu ersten Achse (XX) der zentralen Walze (4c) aufweist, welche kleiner oder gleich 3 Meter in einer Transportposition beträgt.

## Claims

1. Agricultural machine comprising
a first frame (2) and at least one non inflated roller (4), the roller (4) comprising at least one tube (40) mounted for rotation about a first axis (XX) on bearings (20) connected to the first frame (2),
a second frame (3), connected to the first frame (2), and at least one inflated wheel (5), the wheel (5) comprising at least one rim (50), mounted for rotation about a second axis (YY) on bearings (20) connected to the second frame (3), the wheel (5) being provided with at least one tyre (51) threaded onto the rim (50),
the roller (4) having a covering (42) around the tube (40), the tyre (51) of the wheel (5) having a tread (52), the covering (42) and the tread (52) being provided with mouldings (43, 53) defining a pattern element (44, 54) repeated in a transverse direction parallel to the first axis (XX), and to the second axis (YY), respectively,
the pitch (L_{P4}) of transverse repeat of the pattern element (44) of the roller (4) and the pitch (L_{P5}) of transverse repeat of the pattern element (54) of the wheel (5) being equal to the nearest 10%,
the pattern elements (44, 54) defining ribs (45, 55), the height (L_{H4}) of which on the roller (4) and the height (L_{H5}) of which on the wheel (5) are equal to the nearest 90%,
so that the repetition and height of the ribs (45, 55) form, in the earth (10), a series of furrows (11) that are substantially parallel and substantially equidistant.

2. Agricultural machine according to claim 1, wherein the roller (4) is provided with a set of tyres (41) threaded onto the tube (40), the tyres (41) including the covering (42), the tyres (41) of the roller (4) being of the semi-hollow type and wherein a portion of the covering (42) is connected to a sleeve (61) by two sidewalls (62, 63) so as to delimit a hollow annular space (64).

3. Agricultural machine according to claim 2, wherein the hollow annular space (64) of a tyre (41) takes up a volume which is less than the volume taken up by the material that constitutes the tyre (41).

4. Agricultural machine according to one of the preceding claims, wherein the ribs (45, 55) of at least one of the roller (4) or wheel (5) have profiles, viewed in cross section, in the shape of a rounded dome.

5. Agricultural machine according to one of the preceding claims, wherein the ribs (45, 55) of at least one of the roller (4) or wheel (5) have profiles, viewed in cross section, in which the end comprises a flattened area (65).

6. Agricultural machine according to one of the preceding claims, wherein the first axis (XX) and the second axis (YY) are substantially parallel and spaced apart by a selected distance (L_{D}) in a working position.

7. Agricultural machine according to claim 6, wherein the distance (L_{D}) is greater than the height (L_{H4}, L_{H5}) of the ribs (45, 55) of the roller (4) or the wheel (5) and less than the greater of the radii (L_{RL}, L_{RE}) of the roller (4) and the wheel (5).

8. Agricultural machine according to claim 7, wherein the distance (L_{D}) is greater than the height (L_{H4}, L_{H5}) of the ribs (45, 55) of the roller (4) or the wheel (5) and less than the smaller of the radii (L_{RL}, L_{RE}) of the roller (4) and the wheel (5).

9. Agricultural machine according to one of the preceding claims, further comprising braking means (30) adapted to exert a resistant torque in controlled manner between the second frame (3) and the rim (50).

10. Agricultural machine according to one of the preceding claims, comprising two wheels (5) or two pairs of wheels (5), a central roller (4c), and two lateral rollers (4a, 4b), each wheel (5) or pair of wheels (5) being disposed between the central roller (4c) and each of the lateral rollers (4a, 4b), respectively, in a direction parallel to the first axis (XX), in a working position.

11. Agricultural machine according to claim 10, wherein each of the two lateral rollers (4a, 4b) is retractable into a transporting position.

12. Agricultural machine according to claim 11, having a maximum dimension in a direction parallel to the first axis (XX) of the central roller (4c) which is less than or equal to 3 metres in the transporting position.
